# EUROPÄISCHE PATENTSCHRIFT

(11) **EP 0 360 908 B1**
(45) Veröffentlichungstag und Bekanntmachung des Hinweises auf die Patenterteilung: **16.02.1994**
(21) Anmeldenummer: 88116223.4
(22) Anmeldetag: 30.09.1988
(51) Int. Cl.: H02M 3/335

(54) **Primärgetaktetes Schaltnetzteil**
Primary switching power supply
Alimentation de puissance à découpage sur le primaire

(43) Veröffentlichungstag der Anmeldung: 04.04.1990
(73) Patentinhaber: SIEMENS AKTIENGESELLSCHAFT, 80333 München (DE)
(72) Erfinder: Bliesner, Jürgen, Dipl.-Ing., D-8551 Hemhofen (DE)

(56) Entgegenhaltungen:
- EP-A- 0 203 444
- PATENT ABSTRACTS OF JAPAN vol. 9, no. 251 (E-348) 1974 08 Oktober 1985, & JP-A-60 98871 (YOKOKAWA HOKUSHIN DENKI K.K.) 01 Juni 1985,
- INTELEC'85 14 Oktober 1985, München, Deutschland Seite 209 - 215; B. BRAKUS: "Power supply modules for PCB mounting"

## Beschreibung

Die Erfindung bezieht sich auf ein primärgetaktetes Schaltnetzteil, bei dem eine mit einer Betriebsspannung zu speisenden Steuereinheit für einen eine Primärwicklung schaltenden Leistungsschalter auf zwei Wegen ihre jeweilige Betriebsspannung erhält, indem in einer Anlaufphase über eine an die positive Primärspannung geschaltete Anlaufwiderstandsstufe, die über einen Kondensator an Masse geschaltet ist, und einen Schalter eine erste Einspeisung erfolgt, die im angelaufenen Betrieb abgelöst wird durch die Spannung an einem Kondensator, der über eine Diode aus einer mitlaufenden Wicklung geladen wird.

Ein primärgetaktetes Schaltnetzteil ist beispielsweise aus der EP-A-0 203 444 bekannt. Dieses primärgetaktete Schaltnetzteil benötigt zum Betrieb eine Hilfsspannungsversorgung für die Steuereinheit des primären Leistungsschalters. Während des Betriebes des Schaltnetzteils wird die Hilfsspannungsversorgung mittels der mitlaufenden Wicklung aufrechterhalten. Wird jedoch das primärgetaktete Schaltnetzteil nach einer längeren Ausschaltphase wieder eingeschaltet, wird die Hilfsspannungsversorgung mittels des Anlaufwiderstandes vorgenommen. Dabei wird die benötigte Hilfsspannung aus einer Netz- bzw. Gleichrichterspannung ausgekoppelt. Nachteilig ist jedoch die hohe Verlustleistung des Anlaufwiderstandes, wodurch der Wirkungsgrad des Schaltnetzteils sich verschlechtert.

Außerdem ist im Handel ein primärgetaktetes Schaltnetzteil bekannt, dessen Anlaufzweig eine Reihenschaltung aus einem Vorwiderstand und einem Kaltleiter enthält. Durch die Verwendung eines Kaltleiters wird die Verlustleistung des Vorwiderstandes reduziert, da der Kaltleiter nach dem Hochlaufen des primärgetakteten Schaltnetzteil hochohmig wird. Nachteilig ist jedoch, daß nach Abschalten des primärgetakteten Schaltnetzteils der Kaltleiter sich erst vollständig abkühlen muß, bevor das Schaltnetzteil wider eingeschaltet werden kann.

Ein Schaltnetzteil der eingangs genannten Art ist aus "B.Brakus: POWER SUPPLY MODULS FOR PCB MOUNTING IN INTELEC 85, Seite 209 bis 215" bekannt.

Der Erfindung liegt nun die Aufgabe zugrunde, ein primärgetaktetes Schaltnetzteil mit einer primärseitigen Hilfsspannungsversorgung der eingangs genannten Art so weiterzubilden, daß der schaltungstechnische Aufwand reduziert wird.

Diese Aufgabe wird erfindungsgemäß dadurch gelöst, daß beide Kondensatoren zu einem Kondensator vereinigt sind, daß der Schalter die Anlaufwiderstandsstufe, nicht aber den Kondensator von der Steuerschaltung trennt und daß der Schalter mittels eines Zweipunktreglers ansteuerbar ist, wobei ein Eingang des Zweipunktreglers an den Kondensator und der andere Eingang an eine Referenzspannung angeschlossen ist.

Während der Hochlaufphase des Schaltnetzteils, d.h., die Hilfsspannungsversorgung wird noch nicht von der mitlaufenden Hilfswicklung übernommen, wird der Schalter mittels des Zweipunktschalters im Einschalt-Zustand gehalten, wodurch mit Hilfe des Anlaufwiderstandes die Hilfsspannung aus einer Netz- bzw. Gleichrichterspannung ausgekoppelt wird. Am Ende der Hochlaufphase, d.h., nachdem die Hilfsspannungsversorgung eine ausreichende Hilfsspannung erzeugt, wird der Schalter mittels des Zweipunktreglers im Ausschalt-Zustand gesteuert. Da der Anlaufwiderstand des Anlaufzweiges nur während der Anlaufphase benutzt wird, ist ein sofortiges Wiedereinschalten des Schaltnetzteils nach einem eventuellen Ausschalten möglich, wobei sich der Wirkungsgrad des primärgetakteten Schaltnetzteils nicht verschlechtert.

Bei einer weiteren Ausführungsform des Anlaufzweiges des primärgetakteten Schaltnetzteils ist zwischen dem Schalter und dem Anlaufwiderstand ein Kaltleiter geschaltet. Dadurch wird erreicht, daß durch die Aufteilung des Wertes des Anlaufwiderstandes der Platzbedarf für verlustbehaftete Widerstände geringer ist. Außerdem begrenzt bzw. schaltet der Kaltleiter den Strom bzw. das Schaltnetzteil ab, wenn am Ausgang des Schaltnetzteils ein Kurzschluß ansteht.

Bei einer besonders verlustarmen Ausführungsform des Anlaufzweiges des primärgetakteten Schaltnetzteils ist als Schalter ein selbstsperrender, n-Kanal Metalloxidschicht-Feldeffekttransistor vorgesehen. Bei einem solchen selbstsperrenden, n-Kanal MOS-FET fließt ein Drain-Strom erst, wenn die Gate-Source-Spannung einen bestimmten positiven Wert überschreitet. Sobald die Gate-Source-Spannung gleich Null ist, sperrt dieser n-Kanal selbstsperrende MOS-FET, auch als n-Kanal-Enhancement-MOS-FET bekannt. Da bei MOS-FETs eine dünne Siliziumoxid-Schicht das Gate vom Kanal isoliert, kann bei ihnen nie ein Gate-Strom fließen und somit annähernd keine Verlustleistungen auftreten.

Bei einer weiteren Ausführungsform des primärgetakteten Schaltnetzteils ist als Zweipunktregler ein invertierender Schmitt-Trigger vorgesehen. Beim Schmitt-Trigger wird eine Schalthysterese dadurch erzeugt, daß man einen Komparator über einen Spannungsteiler mitkoppelt. Am invertierenden Eingang steht eine Hilfsspannung an, die mit einer Referenzspannung am nichtinvertierenden Eingang verglichen wird. Sobald die Hilfsspannung den Wert der Referenzspannung erreicht hat, nimmt die Ausgangsspannung des Schmitt-Triggers ab, wobei durch die Mitkopplung der Wert der Ausgangsspannung sehr schnell umspringt. Somit erhält man einen sehr einfachen und preiswerten Zweipunktregler.

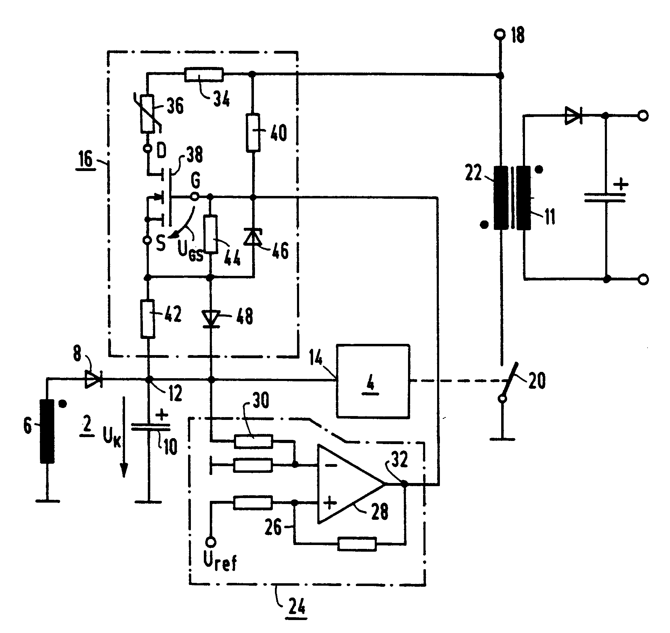

Zur weiteren Erläuterung der Erfindung wird auf die Zeichnung Bezug genommen, in der ein Ausführungsbeispiel des primärgetakteten Schaltnetzteils mit einer primärseitigen Hilfsspannungsversorgung nach der Erfindung schematisch veranschaulicht ist.

In der dargestellten Ausführungsform ist ein primärgetaktetes Schaltnetzteil mit einer primärseitigen Hilfsspannungsversorgung 2 für eine Steuereinheit 4 dargestellt. Die Hilfsspannungsversorgung 2 enthält eine mitlaufende Wicklung 6, eine Diode 8 und einen Kondensator 10. Die mitlaufende Wicklung 6 ist magnetisch mit einer Sekundärwicklung 11 des Wandlers des Schaltnetzteils verbunden. Ferner ist die Reihenschaltung aus der Diode 8 und dem Kondensator 10 elektrisch parallel zur mitlaufenden Wicklung 6 geschaltet. Der Verbindungspunkt 12 von der Diode 8 und dem Kondensator 10 ist mit einem Hilfsspannungseingang 14 der Steuereinheit 4 verbunden. Außerdem ist der Verbindungspunkt 12 über einen Anlaufzweig 16 mit der positiven, primären Eingangsklemme 18 verbunden. Der Ausgang dieser Steuereinheit 4 wirkt auf einen primären Leistungsschalter 20, der einer Primärwicklung 22 des Wandlers des Schaltnetzteils nachgeschaltet ist.

Außerdem ist ein Zweipunktregler 24 eingangsseitig mit dem Hilfsspannungseingang 14 der Steuereinheit 4 des Leistungsschalters 20 und ausgangsseitig mit dem Anlaufzweig 16 verknüpft. Als Zweipunktregler 24 ist ein invertierender Schmitt-Trigger vorgesehen. Dieser Schmitt-Trigger besteht aus einem über einen Spannungsteiler 26 mitgekoppelten Komparator 28. Am Eingang des Spannungsteilers 26 steht eine Referenzspannung U_{ref} an, dessen Wert gleich dem Mindestwert der Hilfsspannung für die Steuereinheit 4 ist. Der Hilfsspannungseingang 14 der Steuereinheit 4 ist mittels eines Widerstandes 30 mit dem invertierenden Eingang des Komparators 28 verknüpft. Am open-collector-Ausgang 32 des Komparators 28 springt die Ausgangsspannung zwischen einem maximalen und minimalen Spannungswert durch die Mitkopplung sehr schnell in Abhängigkeit des Spannungseingangswertes am invertierenden Eingang des Komparators 28 hin und her. D.h., solange die Hilfsspannung der Steuereinheit 4 am Hilfsspannungseingang 14 kleiner als die Referenzspannung U_{ref} ist, bleibt der Spannungswert am open-collector-Ausgang 32 des Komparators 28 auf seinem Maximalwert.

Der Anlaufzweig 16 des primärgetakteten Schaltnetzteils besteht aus einer Reihenschaltung eines Anlaufwiderstandes 34, eines Kaltleiters 36 und eines Schalters 38. Als Schalter 38 ist ein selbstsperrender, n-Kanal Metalloxidschicht-Feldeffekttransistor (MOS-FET) vorgesehen. Dieser MOS-FET 38 ist über seinen Gate-Anschluß G mit dem Ausgang 32 des Zweipunktreglers 24 verknüpft. Der Drain-Anschluß D des MOS-FETs 38 ist über den Kaltleiter 36 und den Anlaufwiderstand 34 mit der positiven, primären Eingangsklemme 18 verbunden. An der Eingangsklemme 18 steht eine Ausgangsspannung eines Netzgleichrichters an, der aus Übersichtlichkeitsgründen nicht dargestellt ist. Der Wert dieser Ausgangsspannung des Netzgleichrichters kann mehrere 100 V, beispielsweise 200 V bzw. 600 V, betragen. Außerdem ist diese Eingangsklemme 18 über einen Widerstand 40 mit dem Gate-Anschluß G des MOS-FETS 38 verknüpft. Der Source-Anschluß S dieses MOS-FETs 38 ist über einen weiteren Widerstand 42 mit dem Verbindungspunkt 12 der Diode 8 und des Kondensators 10 der Hilfsspannungsversorgung 2 verbunden, wobei der Verbindungspunkt 12 wiederum mit dem Hilfsspannungseingang 14 der Steuereinheit 4 verknüpft ist. Ferner ist zwischen dem Gate-Anschluß G und dem Source-Anschluß S eine Parallelschaltung, bestehend aus einem weiteren Widerstand 44 und einer Zenerdiode 46, geschaltet. Elektrisch parallel zum Widerstand 42 ist noch eine Entkopplungsdiode 48 geschaltet. Die Widerstände 40, 42 und 44, die Zenerdiode 46 und die Entkopplungsdiode 48 sind Beschaltungselemente des MOS-FETs 38, die für die Funktionsfähigkeit dieses MOS-FETs 38 notwendig sind.

Anhand des dargestellten primärgetakteten Schaltnetzteils wird die Funktionsweise des Anlaufzweiges 16 in Verbindung mit dem Zweipunktregler 24 näher erläutert:

Zu Beginn des Hochlaufens des primärgetakteten Schaltnetzteils ist der Wert der Kondensatorspannung U_{K} des Kondensators 10 der Hilfsspannungsversorgung 2 gleich Null. Dadurch steht am Hilfsspannungseingang 14 der Steuereinheit 4 des Leistungsschalters 20 und am Eingang des Zweipunktregler 24 keine Spannung an. Am Ausgang 32 des Zweipunktreglers 24 steht eine Spannung an, dessen Wert maximal ist. Dieser Ausgang 32 des Zweipunktreglers 24 ist mit dem Gate-Anschluß G verknüpft, wodurch der Wert der Gate-Source-Spannung U_{GS} gleich dem Maximalwert der Ausgangsspannung des Zweipunktreglers 24 ist. Dieser Maximalwert ist mindestens so groß wie der Wert der Schwellenspannung Uₚ, auch pinch-off voltage genannt, des selbstsperrenden MOS-FETs 38. Dadurch ist der MOS-FET 38 leitend geschaltet, wodurch der Verbindungspunkt 12 und der Hilfsspannungseingang 14 der Steuereinheit 4 über den Widerstand 42, den Kaltleiter 36 und den Anlaufwiderstand 34 mit der positiven, primären Eingangsklemme 18 elektrisch leitend verbunden ist. Diese im durchgeschalteten Anlaufzweig 16 vorhandenen Widerstände 34 und 36 bilden einen Spannungsteiler, der aus einer an der Eingangsklemme 18 anstehenden Ausgangsspannung eines nicht dargestellten Netzgleichrichters eine vorbestimmte Hilfsspannung herauskoppelt. D.h., der maximale Spannungswert am Eingang 18 beträgt 600 V, der mit Hilfe der Widerstände 34 und 36 auf einen Hilfsspannungswert für die Steuereinheit 4 von etwa 10 V heruntergeteilt wird. Dieser heruntergeteilte Spannungswert ist kleiner als der Wert der Referenzspannung U_{ref} des Zweipunktreglers 24. Dadurch bleibt der maximale Spannungswert am Ausgang 32 des Zweipunktreglers 24, wodurch der MOS-FET 38 im Leitend-Zustand verharrt. Durch die Hilfsspannung kann die Steuereinheit 4 den primären Leistungsschalter 20 steuern, wodurch über die magnetische Kopplung der mitlaufenden Wicklung 6 mit der Primär- bzw. Sekundärwicklung 22 bzw. 11 eine Hilfsspannung von der Hilfsspannungsversorgung 2 aufgbaut wird. D.h., infolge der eingekoppelten magnetischen Leistung fließt ein Strom über die Diode 8 zum Kondensator 10 der Hilfsspannungsversorgung 2, wodurch infolge der aufgebrachten Ladung der Wert der Kondensatorspannung U_{K} steigt. Sobald der Wert der Kondensatorspannung U_{K} und damit die Eingangsspannung des Zweipunktreglers 24 den Wert der Referenzspannung U_{ref} übersteigt, springt sofort die Spannung am Ausgang 32 des Zweipunktreglers 24 vom Maximalwert auf seinen Minimalwert um. Dieser Minimalwert ist kleiner als die Schwellenspannung Uₚ des MOS-FETs 38, vorzugsweise ist der Minimalwert 0 V oder kleiner. Durch diesen Spannungssprung am Gate-Anschluß G des MOS-FETs 38 gelangt dieser MOS-FET 38 in den sperrenden Zustand, wodurch der Anlaufzweig 16 ausgeschaltet und die Hochlaufphase abgeschlossen ist. Im eingeschwungenen Zustand wird die Steuereinheit 4 von der Hilfsspannungsversorgung 2, die magnetisch mit dem Wandler des Schaltnetzteils gekoppelt ist, versorgt.

Wenn nun unmittelbar im Anschluß an diese Hochlaufphase ein Fehler im Schaltnetzteil auftritt, wodurch das Schaltnetzteil abgeschaltet wird, kann sofort wieder eingeschaltet werden, sofern der Fehler nicht mehr vorhanden ist, da der verwendete Kaltleiter 36 nur während der Anlaufphase in Betrieb ist und niederohmig bleibt. Dadurch, daß der Wert des Anlaufwiderstandes 34 auf zwei Widerstände aufgeteilt ist, kann der Anlaufzweig 16 platzsparend aufgebaut werden. Da der Anlaufzweig nur während der Anlaufphasen in Betrieb ist, ist die Verlustleistung gegenüber bekannten Anordnungen sehr verringert, wodurch der Wirkungsgrad verbessert ist. Auch durch die Verwendung eines MOS-FETs anstelle eines bipolaren Transistors als Schalter 38 wird die Verlustleistung niedrig gehalten. Der Kaltleiter 36 übernimmt aber noch eine weitere Funktion, nämlich die Begrenzung bzw. Abschaltung des Strom-bzw. des Schaltnetzteils, wenn am Ausgang des Schaltnetzteils ein Kurzschluß ansteht.

Somit erhält man ein primärgetaktetes Schaltnetzteil mit einem verlustarmen Anlaufzweig 16 trotz eines hohen Gleichspannungswertes am Eingang 18, wobei der Anlaufzweig 16 mit zugehörigem Zweipunktregler 24 platzsparend und preiswert aufgebaut ist. Außerdem ist bei dieser Ausführungsform des Schaltnetzteils ein sofortiges Wiedereinschalten möglich.

## Patentansprüche

1. Primärgetaktetes Schaltnetzteil, bei dem eine mit einer Betriebsspannung zu speisende Steuereinheit (4) für einen eine Primärwicklung (22) schaltenden Leistungsschalter (20) auf zwei Wegen ihre jeweilige Betriebsspannung erhält, indem in einer Anlaufphase über eine an die positive Primärspannung geschaltete Anlaufwiderstandsstufe (34,36), die über einen Kondensator an Masse geschaltet ist, und einen Schalter (38) eine erste Einspeisung erfolgt, die im angelaufenen Betrieb abgelöst wird durch die Spannung an einem Kondensator, der über eine Diode (8) aus einer mitlaufenden Wicklung (6) geladen wird, **dadurch gekennzeichnet,** daß beide Kondensatoren zu einem Kondensator (10) vereinigt sind, daß der Schalter (38) die Anlaufwiderstandsstufe (34,36), nicht aber den Kondensator (10) von der Steuerschaltung trennt und daß der Schalter (38) mittels eines Zweipunktreglers (24) ansteuerbar ist, wobei ein Eingang des Zweipunktreglers an den Kondensator (10) und der andere Eingang an eine Referenzspannung angeschlossen ist.

2. Primärgetaktetes Schaltnetzteil nach Anspruch 1, **dadurch gekennzeichnet,** daß zwischen dem Schalter (38) und dem Anlaufwiderstand (34) ein Kaltleiter (36) geschaltet ist.

3. Primärgetaktetes Schaltnetzteil nach Anspruch 1, **dadurch gekennzeichnet,** daß als Schalter (38) ein selbstsperrender, n-Kanal Metalloxidschicht-Feldeffekttransistor vorgesehen ist.

4. Primärgetaktetes Schaltnetzteil nach Anspruch 1, **dadurch gekennzeichnet,** daß als Zweipunktregler (24) ein invertierender Schmitt-Trigger vorgesehen ist.

## Claims

1. Primary clocked switched-mode power supply, where a control unit (4) to be supplied with an operating voltage obtains its respective operating voltage for a circuit breaker (20) actuating a primary winding (22) on two paths, in that a first supply takes place in a starting phase by way of a starting resistance stage (34, 36) connected to the positive primary voltage and connected to earth by way of a capacitor, and by way of a switch (38), which first supply is relieved in the started operation by the voltage at a capacitor which is loaded by way of a diode (8) from a following winding (6), characterized in that both capacitors are united into one capacitor (10), in that the switch (38) separates the starting resistance stage (34, 36), but not the capacitor (10), from the control circuit and in that the switch (38) can be controlled by means of a two-point regulator (24), whereby one input of the two-point regulator is attached to the capacitor (10) and the other input to a reference voltage.

2. Primary clocked switched-mode power supply according to claim 1, characterized in that a PTC thermistor (36) is connected between the switch (38) and the starting resistance (34).

3. Primary clocked switched-mode power supply according to claim 1, characterized in that a self-locking, n-channel metal-oxide-layer field-effect transistor is provided as switch (38).

4. Primary clocked switched-mode power supply according to claim 1, characterized in that an inverting Schmitt trigger is provided as two-point regulator (24).

## Revendications

1. Alimentation à découpage commandée de façon cadencée côté primaire, dans laquelle une unité de commande (4), à alimenter par une tension de service, d'un disjoncteur (20) mettant en circuit un enroulement primaire (22), reçoit sa tension de service de deux voies, par le fait que, pendant une phase de démarrage, une première alimentation s'effectue par l'intermédiaire d'un interrupteur (30) et d'un étage de résistances de démarrage (34,36), qui est connecté à la tension primaire positive et qui est relié à la masse par l'intermédiaire d'un condensateur, la première alimentation étant interrompue, une fois le démarrage effectué, par la tension appliquée à un condensateur, qui est chargé par l'intermédiaire d'une diode (8) à partir d'un enroulement connecté (6), caractérisée par le fait que les deux condensateurs sont réunis en un condensateur (10), que l'interrupteur (38) sépare, du circuit de commande, l'étage de résistances de démarrage (34,36), mais non le condensateur (10), et que l'interrupteur (38) peut être commandé au moyen d'un régulateur (24) effectuant un réglage en deux points, une entrée du régulateur effectuant un réglage en deux points étant reliée au condensateur (10), tandis que l'autre entrée est placée à une tension de référence.

2. Alimentation à découpage commandée de façon cadencée côté primaire, selon la revendication 1, caractérisée par le fait qu'un thermistor (36) est branché entre l'interrupteur (38) et la résistance de démarrage (34).

3. Alimentation à découpage commandée de façon cadencée côté primaire suivant la revendication 1, caractérisée par le fait qu'il est prévu, comme interrupteur (38), un transistor à effet de champ à couche d'oxyde métallique autobloquant à canal n.

4. Alimentation à découpage commandée de façon cadencée côté primaire suivant la revendication 1, caractérisée par le fait qu'un déclencheur de Schmitt inverseur est prévu en tant que régulateur (24) effectuant un réglage en deux points.
